# EUROPEAN PATENT APPLICATION

(11) **EP 4 811 234 A1**
(43) Date of publication of application: **23.09.2026**
(21) Application number: 25199008.1
(22) Date of filing: 29.08.2025
(51) Int. Cl.: G06Q 10/0631

(54) **INFORMATION PROCESSING SYSTEM AND INFORMATION PROCESSING PROGRAM**

(30) Priority: 21.03.2025 JP 2025047347
(71) Applicant: Fujifilm Business Innovation Corp., Tokyo 107-0052 (JP)
(72) Inventor: SASAKI, Kimihiko, Yokohama (JP)
(74) Representative: Meissner Bolte Partnerschaft mbB

(57) **Abstract**

An information processing system includes a memory and a processor configured to, in a job management interface having areas where jobs are assignable to individual resources, display, along the same time axis on a schedule screen for placing jobs, an area where in-house jobs are placed and an area where outsourced jobs are placed, in-house jobs being jobs assigned for in-house production and outsourced jobs being jobs assigned for outsourced production.

## Description

### Background

### (i) Technical Field

The present disclosure relates to an information processing system and an information processing program.

### (ii) Related Art

Japanese Unexamined Patent Application Publication No. 2008-040878 discloses a technology related to a print order device and the like that can construct a workflow across multiple companies and create an estimate for the constructed workflow without the need for an experienced manager. Japanese Unexamined Patent Application Publication No. 2008-040878 discloses the feature of constructing a workflow using a virtual workflow made up of types of steps and processing sequences that conform to conditions, and then calculating and presenting an estimate for the workflow.

Japanese Unexamined Patent Application Publication No. 2008-112393 discloses a technology that allows for easy-to-understand editing of a suitably connected workflow even when different types of system processes coexist. Japanese Unexamined Patent Application Publication No. 2008-112393 discloses the feature of exporting grouped sub-workflows, which are then imported as sub-workflows in another system.

### Summary

Incidentally, among systems for producing and managing products such as printed materials, it is common to have a system that creates a production workflow and then creates and manages a schedule on the basis of the production workflow. The production workflow is created to follow a sequential series of tasks involving discrete resources, such as personnel and/or equipment, or in units of products or parts to be produced. In such a production workflow, some jobs may be outsourced, depending on the availability of equipment. However, outsourced jobs and in-house jobs are usually managed separately, and comprehensive management of in-house jobs and outsourced jobs has not been achieved thus far.

Accordingly, it is an object of the present disclosure to provide an information processing system and an information processing program for improving the convenience of job management in the case of managing in-house jobs and outsourced jobs in a workflow.

According to a first aspect of the present disclosure, there is provided an information processing system comprising: a memory; and a processor configured to: in a job management interface having areas where jobs are assignable to individual resources, display, along the same time axis on a schedule screen for placing jobs, an area where in-house jobs are placed and an area where outsourced jobs are placed, in-house jobs being jobs assigned for in-house production and outsourced jobs being jobs assigned for outsourced production.

According to a second aspect of the present disclosure, in the information processing system according to the first aspect, when processing is accepted from a user to change the in-house job to the outsourced job, the processor is configured to refer to workflow information and batch-change the targeted in-house job and a corresponding job immediately before or immediately after to the outsourced job.

According to a third aspect of the present disclosure, in the information processing system according to the second aspect, the processor is configured to refer to utilization rates of the resources in the workflow information, and if the utilization rate of a resource that has been assigned the job immediately before or immediately after is at or above a threshold, permit changing of the job to the outsourced job.

According to a fourth aspect of the present disclosure, in the information processing system according to any of the first to third aspects, when processing is accepted from a user to change one job out of a plurality of steps to be performed for a same part to the outsourced job, the processor is configured to change the other jobs to the outsourced job.

According to a fifth aspect of the present disclosure, in the information processing system according to any of the first to fourth aspects, when processing is accepted from a user to change a specific job that involves processing using a plurality of parts to the outsourced job, the processor is configured to batch-change the plurality of jobs for processing the plurality of parts to be used in the specific job to the outsourced job.

According to a sixth aspect of the present disclosure, in the information processing system according to any of the second to fifth aspects, the processor is configured to change a job to the outsourced job when the corresponding job immediately before or immediately after is unassigned.

According to a seventh aspect of the present disclosure, in the information processing system according to any of the second to sixth aspects, when processing is accepted from a user to change two consecutive jobs to the outsourced job in a workflow for managing jobs in units of parts, the processor is configured to collectively place the consecutive jobs as a single continuous job card representing the outsourced job on the schedule screen.

According to an eighth aspect of the present disclosure, in the information processing system according to any of the second to seventh aspects, when processing is accepted from a user to change a job to the outsourced job, the processor is configured to determine a time setting for the outsourced job by using a trained model that has been trained using a history of jobs and/or resources.

According to a ninth aspect of the present disclosure, in the information processing system according to any of the second to eighth aspects, when processing is accepted from a user to change a job to the outsourced job, the processor is configured to refer to a history of jobs processed in the past and determine a time setting for the outsourced job based on the actual time it took to process jobs similar to the job in question.

According to a 10th aspect of the present disclosure, in the information processing system according to any of the second to ninth aspects, when processing is accepted from a user to change a job to the outsourced job, the processor is configured to acquire a time setting for the outsourced job from an order-receiving/order-placing system and update the time setting according to updates in the order-receiving/order-placing system.

According to an 11th aspect of the present disclosure, in the information processing system according to any of the first to 10th aspects, when processing is accepted from a user to change the outsourced job to the in-house job, and the outsourced job includes jobs of different types, the processor is configured to display the jobs as unassigned jobs split into two job cards.

According to a 12th aspect of the present disclosure, in the information processing system according to any of the first to 11th aspects, when processing is accepted from a user to change the outsourced job to the in-house job, and the outsourced job includes jobs of different types, the processor is configured to split the jobs into two job cards, place only the job that corresponds to where the outsourced job was moved to, and display the other job as an unassigned job.

According to a 13th aspect of the present disclosure, in the information processing system according to any of the first to 12th aspects, when processing is accepted from a user to change the outsourced job to the in-house job, the processor is configured to refer to workflow information and prohibit changing of the outsourced job that includes a task for which the job in question may not be done in-house.

According to a 14th aspect of the present disclosure, in the information processing system according to the second or third aspect, wherein the utilization rates of the resources in the workflow information are calculated based on scheduled operating times, within an uptime during a prescribed interval, that correspond to the resources.

According to a 15th aspect of the present disclosure, there is provided an information processing program causing a computer to execute a process comprising, in a job management interface having areas where jobs are assignable to individual resources, accepting selection of a specific area while a first schedule screen on which job assignment is limited is being displayed, displaying a second schedule screen on which the selected specific area is displayed at a larger scale than on the first schedule screen, and upon accepting placement of a card of an unassigned job on the second schedule screen, updating the card of the accepted job to a corresponding position on the first schedule screen.

According to the first aspect, it is possible to improve the convenience of job management in the case of managing in-house jobs and outsourced jobs in a workflow.

According to the second aspect, it is possible to improve convenience with consideration for batch processing of corresponding jobs.

According to the third aspect, it is possible to change a job to an outsourced job in consideration of utilization rate.

According to the fourth aspect, it is possible to change a job to an outsourced job in consideration of a step for a part.

According to the fifth aspect, it is possible to change a job to an outsourced job in consideration of steps for multiple parts.

According to the sixth aspect, it is possible to improve convenience in a case where a job and a corresponding job immediately before or immediately after are outsourced collectively.

According to the seventh aspect, it is possible to ensure perspicuity in a case of outsourcing multiple jobs for a single part.

According to the eighth aspect, it is possible to determine a time setting for an outsourced job efficiently using a trained model.

According to the ninth aspect, it is possible to determine a time setting for an outsourced job efficiently by referring to similar jobs.

According to the 10th aspect, it is possible to determine a time setting with consideration for updates in an order-receiving/order-placing system.

According to the 11th aspect, it is possible to improve convenience when changing an outsourced job to an in-house job.

According to the 12th aspect, it is possible to improve convenience when changing an outsourced job to an in-house job.

According to the 13th aspect, it is possible to improve convenience when changing an outsourced job to an in-house job.

According to the 14th aspect, it is possible to manage the changing of a job to an outsourced job in consideration of a utilization rate based on calculation of scheduled operating time.

According to the 15th aspect, it is possible to improve the convenience of job management in the case of managing in-house jobs and outsourced jobs in a workflow.

### Brief Description of the Drawings

An exemplary embodiment of the present disclosure will be described in detail based on the following figures, wherein:
Fig. 1 is a schematic diagram illustrating a production system according to an exemplary embodiment;
Fig. 2 is a block diagram illustrating an example of a functional configuration of a production management system according to an exemplary embodiment;
Fig. 3 is an example of displaying a production workflow in a management interface;
Fig. 4 is a diagram illustrating an example of displaying a schedule in a management interface;
Fig. 5 is a diagram representing a case in which outsourced jobs exist in a production workflow;
Fig. 6 is an example of a schedule screen on which an in-house job area and an outsourced job area are displayed in parallel;
Figs. 7A and 7B are an example of displaying a selection screen from a workflow diagram screen to accept change processing;
Figs. 8A and 8B are an example of displaying a change selection screen from a schedule screen to accept change processing;
Fig. 9 is an example of an equipment management table;
Fig. 10 is an example of a task management table;
Fig. 11 is an example of an equipment utilization rate management table;
Fig. 12 is an example of a change processing suggestion screen;
Fig. 13 is a control flow illustrating a discrimination process in a case of outsourcing a selected task;
Fig. 14 is a control flow for performing a placement discrimination process with consideration for an order relationship;
Fig. 15 is a control flow for collectively changing consecutive tasks before and/or after a selected task to outsourced tasks;
Fig. 16 is a control flow for updating a table and updating a schedule display when change processing is performed to change a job from an in-house job to an outsourced job;
Fig. 17 is a control flow for determining whether to discontinue when attempting to change a job from an outsourced job to an in-house job;
Fig. 18 is a control flow for extracting a task that may not be done in-house when attempting to change a job from an outsourced job to an in-house job; and
Figs. 19A and 19B are an example of warnings issued when a condition is not met.

### Detailed Description

Hereinafter, an exemplary embodiment according to the present disclosure will be described with reference to the drawings. Note that in the drawings, identical or similar components and portions are denoted with the same reference signs. Also, the dimension ratios in the drawings have been exaggerated for clarity, and may be different from the actual ratios in some cases.

### <Production system 1>

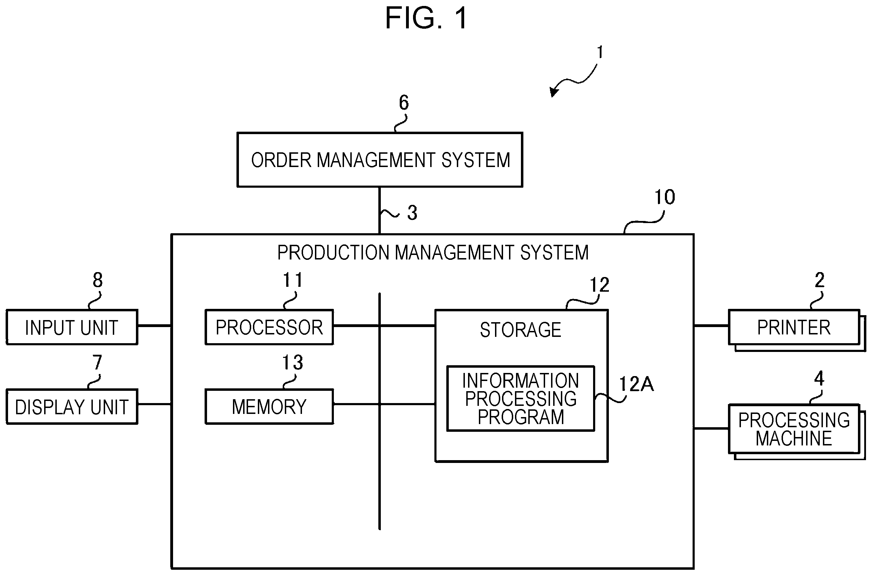

First, a production system 1 according to the exemplary embodiment will be described. Fig. 1 is a schematic diagram illustrating the production system 1 according to the exemplary embodiment.

The production system 1 is a system for producing products (specifically printed material). In the exemplary embodiment, the production system 1 receives an order for producing printed material, generates a production plan, and equipment produces the printed material in accordance with the production plan.

The production of printed material is one example of a task. The production of printed material is a concept that encompasses each step to be executed to produce printed material. The printed material may be any of books, booklets, and flyers, for example.

Specifically, as illustrated in Fig. 1, the production system 1 is provided with multiple printers 2, multiple processing machines 4, an order management system 6, a display unit 7, an input unit 8, and a production management system 10.

As illustrated in Fig. 1, the components of the production system 1 are connected by communication lines 3. The communication lines 3 use wired lines, wireless channels, or both, for example. Communication lines using wireless channels may use the Internet or an intranet, for example. Hereinafter, each component of the production system 1 will be described.

Note that the product to be produced is not limited to the example of printed material and may be some other industrial product, or may be a product produced by equipment. In the present disclosure, tasks are not limited to the production of printed material and may also be the production of a product other than printed material, or other tasks such as control and/or manipulation. Consequently, a production system according to an exemplary embodiment of the present disclosure may also be a system that produces products other than printed material. A system according to an exemplary embodiment of the present disclosure may also be a task system for performing tasks that are not associated with the production of products.

### <Printers 2 and processing machines 4>

The printers 2 and processing machines 4 are examples of equipment capable of performing tasks. The multiple printers 2 are pieces of equipment used to print onto recording media. The multiple processing machines 4 are pieces of equipment used to process the recording media on which printing has been performed. The processing machines 4 may be, among other things, cutting machines for cutting the recording media, binding machines for binding the recording media, and hole-punching machines for punching holes into the recording media. In the following, the printers 2 and processing machines 4 may be collectively referred to as the equipment 2, 4, and may be described with the reference signs omitted. The equipment 2, 4 are an example of resources in the present disclosure.

### <Order management system 6>

The order management system 6 is an example of an order-receiving/order-placing system that manages information (hereinafter referred to as production information) related to the production of printed material ordered by a customer. The order management system 6, upon receiving an order for the production of printed material from a customer, sends production information regarding the printed material to the production management system 10 via the communication line 3. The order management system 6 also manages deadlines for outsourced deliverables.

### <Display unit 7 and input unit 8>

The display unit 7 is an example of a display, and is a component that displays presentation information to be presented to a user. Specifically, in one example, the display unit 7 is configured as a liquid crystal display (LCD) panel. Note that the display unit 7 is not limited to an LCD panel and may also be an organic light-emitting diode (OLED) display panel or any other device capable of displaying presentation information to be presented to a user.

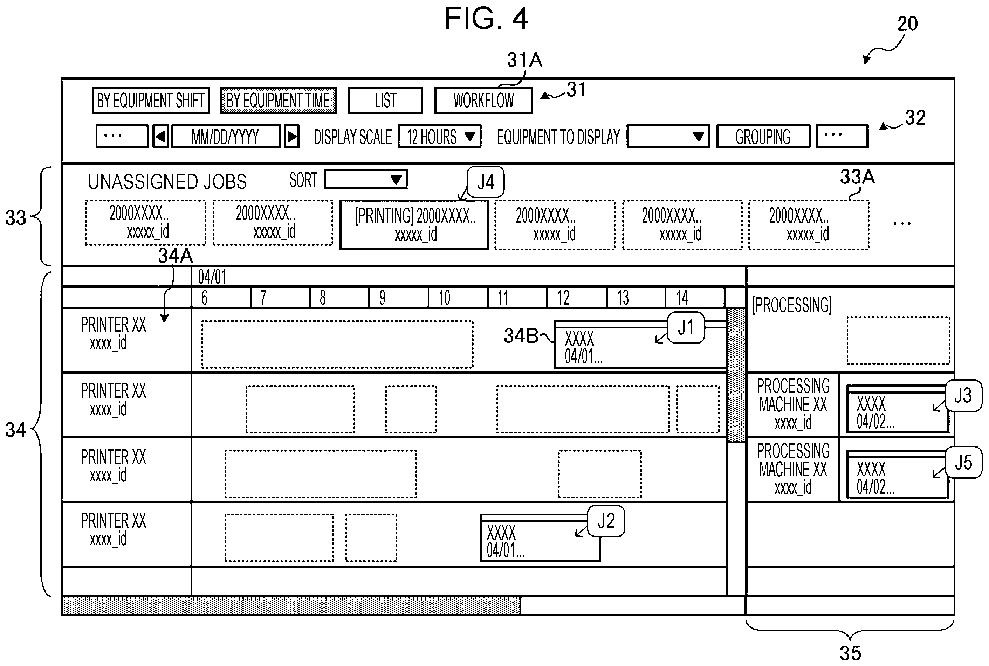

The display screens to be displayed by the display unit 7 include a job management interface 20 (see Fig. 4). The job management interface 20 has an area in which jobs may be assigned to discrete resources, and includes a schedule screen 34 that accepts and reflects the placement of job cards. Specific forms of the job management interface 20 and the schedule screen 34 will be described later.

The input unit 8 is a component that accepts instructions entered by a user. Specifically, in one example, the input unit 8 is configured as a pointing device, such as a mouse, and one or more input keys, such as a keyboard.

Note that the input unit 8 is not limited to a pointing device and input keys, and may also be configured as a touch panel or any other device capable of accepting instructions entered by a user.

### <Production management system 10>

The production management system 10 is an example of an information processing system of the present disclosure, and is a system that manages the production of printed material. The production management system 10 includes a function causing the display unit 7 to display various screens, including the job management interface 20. Note that the production system 1 may be understood as one example of an information processing system.

Specifically, the production management system 10 functions as a computer and includes a processor 11, storage 12, and a memory 13, as illustrated in Fig. 1.

For the processor 11, a general-purpose processor such as a central processing unit (CPU) is used, for example.

The storage 12 stores various programs, including an information processing program 12A, and various data. The storage 12 is achieved specifically by a recording device such as a hard disk drive (HDD), a solid-state drive (SSD), or flash memory. The storage 12 is not limited to being configured as a single device, and may also be configured as multiple devices provided in physically separate locations. Note that the information processing program 12A is one example of an information processing program.

The memory 13 is a work area that the processor 11 uses to execute various programs, and temporarily records various programs or various data when the processor 11 executes a process. The processor 11 reads out various programs, including the information processing program 12A, from the storage 12 into the memory 13, and executes the programs using the memory 13 as a work area.

In the production management system 10, the processor 11 executes a processing program to achieve various functions for executing predetermined processing. Hereinafter, a functional configuration achieved through cooperation between the processor 11 serving as a hardware resource and the processing program serving as a software resource will be described.

### <Functional configuration of production management system 10>

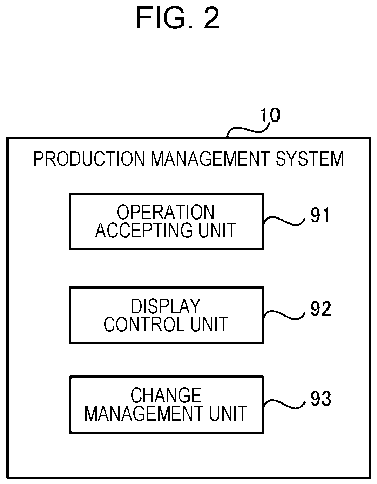

Fig. 2 is a block diagram illustrating an example of a functional configuration of the production management system 10 according to the exemplary embodiment. In one example, as illustrated in Fig. 2, the production management system 10 is provided with an operation accepting unit 91, a display control unit 92, and a change management unit 93.

The operation accepting unit 91 accepts user operations with respect to the management interface 20. The display control unit 92 displays the management interface 20 and controls the display of screens in the management interface 20. The change management unit 93 manages change processing. Change processing is processing for changing an in-house job to an outsourced job, processing for changing an outsourced job to an in-house job, and processing related to these changes. In the present exemplary embodiment, the operation accepting unit 91 accepts operations pertaining to change processing from the user on prescribed screens of the management interface 20. The following references examples of screens to describe processing by each unit in detail. Note that although the following describes an example in which an in-house job is a job to be processed by one's own company while an outsourced job is a job for which an order is submitted to another company, an exemplary embodiment is not limited thereto. For example, an exemplary embodiment may not only handle jobs assigned to one's own company/another company, but also handle jobs with one's own department as in-house jobs while handling jobs assigned to another department within the same company as outsourced jobs. Note that a job in the present exemplary embodiment is a unit of management whereby one or more tasks are assigned. Jobs are basically managed such that one task is assigned in one job, but if more fine-grained units of tasks are available, jobs may also be managed such that multiple tasks are assigned in one job. Outsourced jobs are managed such that, for example, multiple tasks for the same part are assigned in one job.

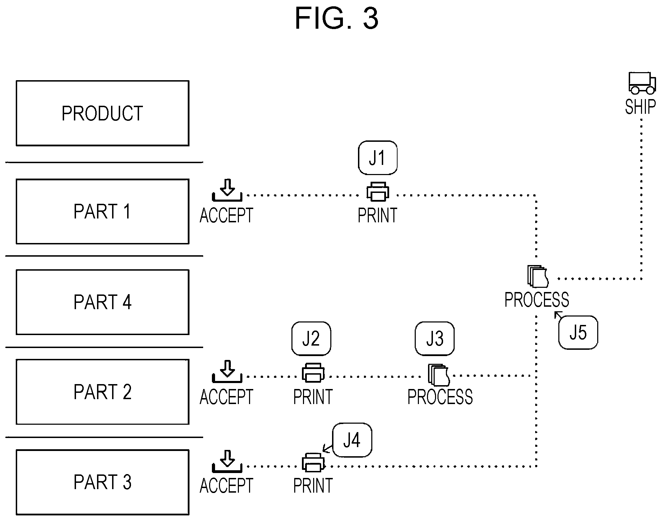

To explain the premise of the present exemplary embodiment, the following describes an example of screens in a management interface 20 in a normal in-house case. Fig. 3 is an example of displaying a production workflow in a management interface. Fig. 4 is a diagram illustrating an example of displaying a schedule in a management interface.

As illustrated in Fig. 3, in a production workflow representing tasks from creation to shipment of a printed material product, a product P is produced by being divided into individual units from part 1 to part 4. As an example, on the schedule display in Fig. 4, corresponding jobs (tasks) are indicated by J1 to J5. Part 1 involves job J1, part 2 involves jobs J2 and J3, part 3 involves job J4, and part 4 involves job J4. Part 1 is created by printing in job J1. Part 2 is created by printing in job J2 and processing in job J3. Part 3 is created by printing in job J4. Part 4 is created by processing in job J5, and job J5 entails processing using the created parts 1, 2, and 3.

As illustrated in Fig. 4, when presenting the schedule display in the management interface 20, the schedule display includes a display selection area 31, a menu area 32, an unassigned job area 33, and a schedule screen 34.

The display selection area 31 allows the user to select the display format in the job management interface 20 when setting a schedule of tasks for each piece of printed material for which an order has been received. Note that a workflow button 31A may be pressed to display a screen representing the production workflow illustrated in Fig. 3.

The menu area 32 is for setting the display form of display content to be displayed on the schedule screen 34 in accordance with the display format selected in the display selection area 31. The menu area 32 may be used to adjust the range of dates and times, or in other words, the calendar display period, over which a task schedule is to be set. Also, the time axis of jobs displayed on the schedule screen 34 may be changed using a display scale setting to set the magnification ratio, or in other words the scale, of the time axis.

In the unassigned job area 33, unassigned job cards 33A that have not been assigned to equipment are displayed. The user is able to assign a job to the operating schedule of the equipment 2, 4 by selecting an unassigned job card 33A and then dragging and dropping to place the selected card on the schedule screen 34. Note that if the product is printed material, a printing job corresponds to the equipment 2 (printer 2), and a processing job corresponds to the equipment 4 (processing machine 4).

On the schedule screen 34, the operating schedules of jobs assigned to equipment information 34A indicating the equipment 2, 4 are arranged and displayed as job cards 34B. The display of the schedule screen 34 is divided into time periods according to the job time axis set by the display scale 32A. The display in Fig. 4 is an example in which the time axis has been set to 12 hours (units of days). Using units of 12 hours allows partial information related to the attributes of jobs to be displayed in the job cards 34B. An out-of-display area 35 may also be included, in parallel with the schedule screen 34. The out-of-display area 35 is for displaying jobs not displayed on the schedule screen 34, and may be switched between being displayed or hidden by an operation in the menu area 32. In the example illustrated in the diagram, job J3 and job J5 are displayed. In this way, related jobs (for example, other jobs for the same product) that are related to the jobs currently displayed on the schedule screen 34 may be displayed in the out-of-display area 35 when the related jobs are not currently displayed on the schedule screen 34. Note that the out-of-display area 35 is omitted from the description below.

The foregoing describes the schedule display of the job management interface 20 that serves as the premise. The following describes an example of the schedule screen 34 according to the present exemplary embodiment in which in-house jobs and outsourced jobs are displayed on the same time axis. On the schedule screen 34 according to the present exemplary embodiment, the display control unit 92 displays, along the same time axis, an area 34I where in-house jobs are placed and an area 34O where outsourced jobs are placed.

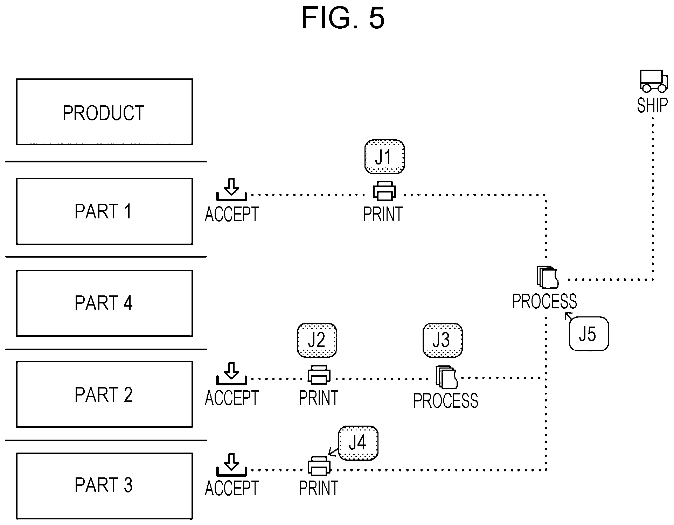

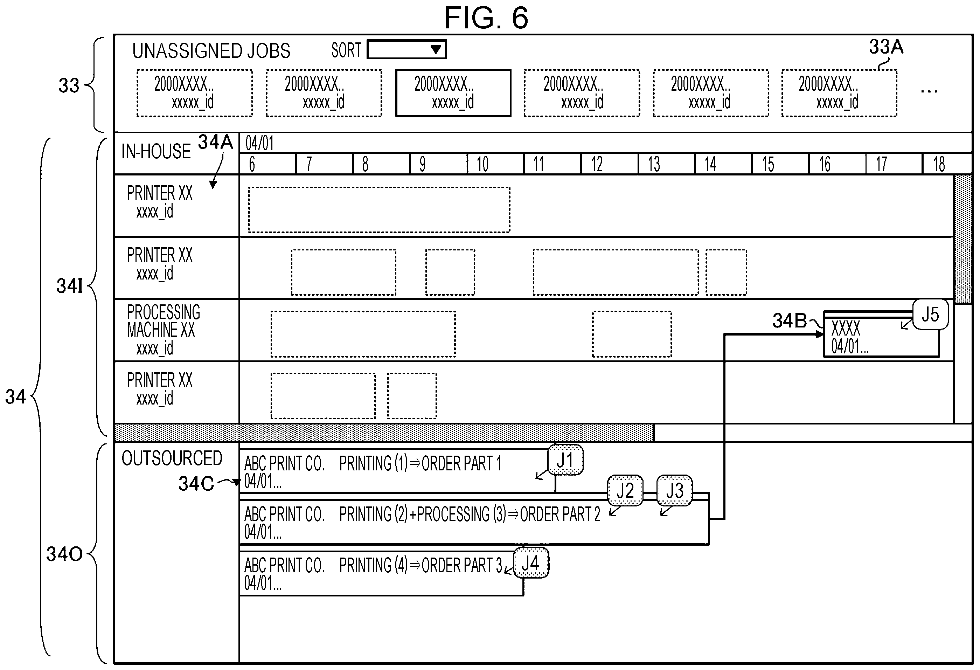

Fig. 5 is a diagram representing a case in which outsourced jobs exist in a production workflow. Fig. 5 indicates that jobs J1 to J4 have been outsourced. Fig. 6 is an example of a schedule screen on which an in-house job area and an outsourced job area are displayed in parallel.

In job cards 34C of outsourced jobs placed in the outsourced job area 34O, information is expressed to indicate only the inputs/outputs of requested jobs J1 to J4 organized according to the outsourcing destination. In particular, jobs J2 and J3 indicate part 2, and are expressed as the input/output of part 2. In the outsourced job area 34O, information may be expressed to indicate only the inputs/outputs to be ordered to and delivered from outsourcing destinations, and thus items of tasks and parts (products) are displayed in parallel in multiple rows. In regard to part 2, processing is accepted from the user to change two consecutive jobs to outsourced jobs in the production workflow for managing jobs in units of parts. In this case, the job card 34C of part 2 is placed as a single continuous job card representing the outsourced jobs in the outsourced job area 34O of the schedule screen 34. Job J5 may be performed once parts 1-3 are all ready, and thus job J5 is scheduled to be performed after delivery of part 2. Note that the outsourced job area 34O and the time axis area displayed in parallel with the equipment information 34A in the in-house job area 34I on the schedule screen 34 are examples of an area where a job is assignable according to the present disclosure.

The processing for changing from in-house to outsourced may be performed collectively on more than one job. The change management unit 93 may performing processing for referring to workflow information and batch-changing a targeted in-house job and a corresponding job immediately before or immediately after to outsourced jobs. For example, in the case of changing job J2 of part 2 to an outsourced job, job J3, which is the next step of part 2, may also be changed to an outsourced job. When processing is accepted from the user to change one job out of multiple steps to be performed for the same part to an outsourced job, the change management unit 93 may also change the other jobs to outsourced jobs. In the case of changing job J5 of part 4 to an outsourced job, jobs J1 to J4 of parts 1 to 3 may also be batch-changed to outsourced jobs. Job J5 is handled as a specific job for processing that involves multiple parts. Accordingly, when processing is accepted from the user to change a specific job to an outsourced job, the change management unit 93 may also batch-change the multiple jobs for processing the multiple parts to be used in the specific job to outsourced jobs. The change management unit 93 may also change a job to an outsourced job when the corresponding job immediately before or immediately after is unassigned.

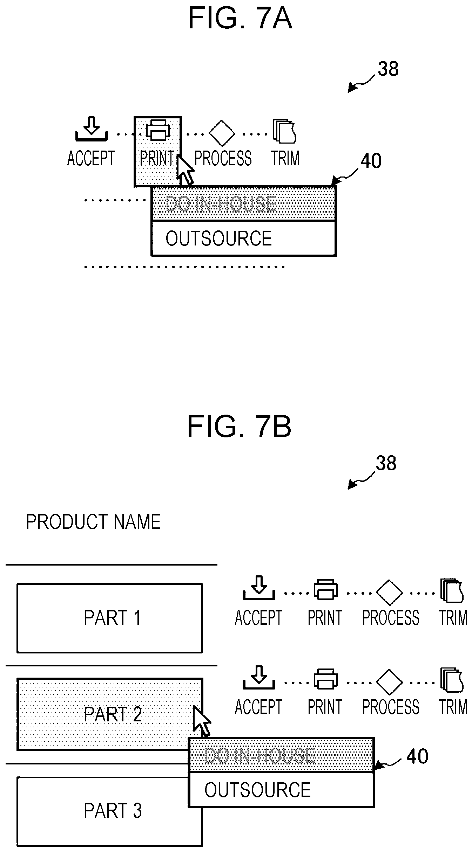

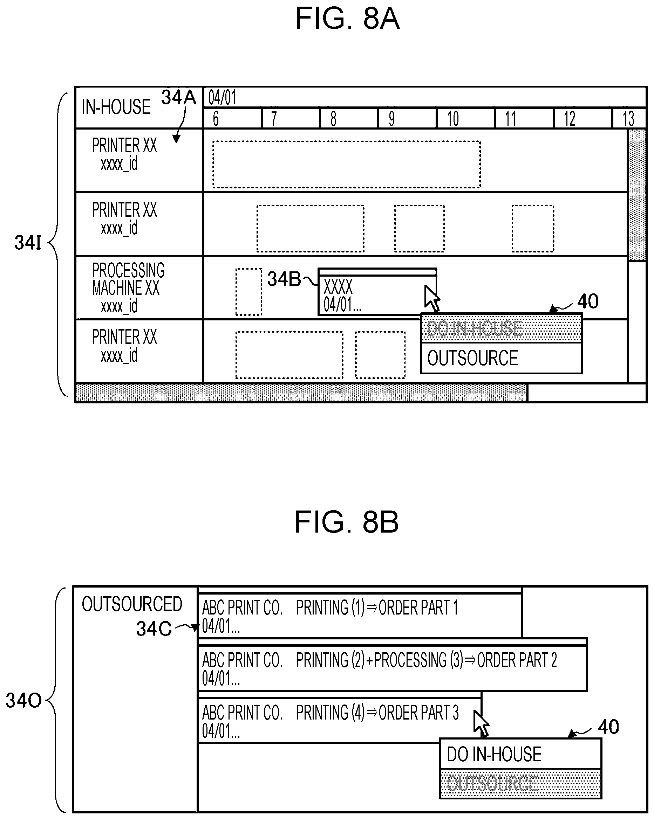

Next, examples of screens for accepting change processing will be described. Change processing is accepted from a workflow diagram screen 38 or the schedule screen 34. Figs. 7A and 7B are an example of displaying a selection screen 40 from the workflow diagram screen 38 to accept change processing. In Fig. 7A, the selection screen 40 is displayed in response to a selection operation (a tap or a click) performed on an individual task. On the selection screen 40, the options "Do in-house" and "Outsource" are displayed, and any non-selectable option is grayed out. The option "Do in-house" is grayed out if an order has not been placed yet or if the task is already in-house. When change processing is performed in units of parts, all jobs included in a part are batch-changed to outsourced jobs. Figs. 8A and 8B are an example of displaying the change selection screen 40 from the workflow diagram screen 38 to accept change processing. In Fig. 8A, an in-house job card 34B is selected from the area 34I where in-house jobs are placed on the schedule screen 34, and the selection screen 40 is displayed. In Fig. 8B, the job card 34C of an outsourced job is selected from the area 34O where outsourced jobs are placed on the schedule screen 34, and the selection screen 40 is displayed. For an outsourced job, change processing is performed to change the job to in-house, and therefore the option "Outsource" is grayed out on the selection screen 40. For an in-house job that may not be assigned because of a lack of equipment availability, the job is outsourced. In some cases, a job may be reverted from outsourced to in-house if, for example, equipment availability is freed up as a result of sleeping an item for which a long operating time had been reserved, thus making it possible to do the outsourced job in-house.

The change management unit 93 refers to the following workflow information to determine a time setting for an outsourced job, calculate the utilization rate of the equipment 2, 4, and the like in change processing.

The workflow information includes information that is managed in tables, namely an equipment management table 50, a task management table 51, and an equipment utilization rate management table 52.

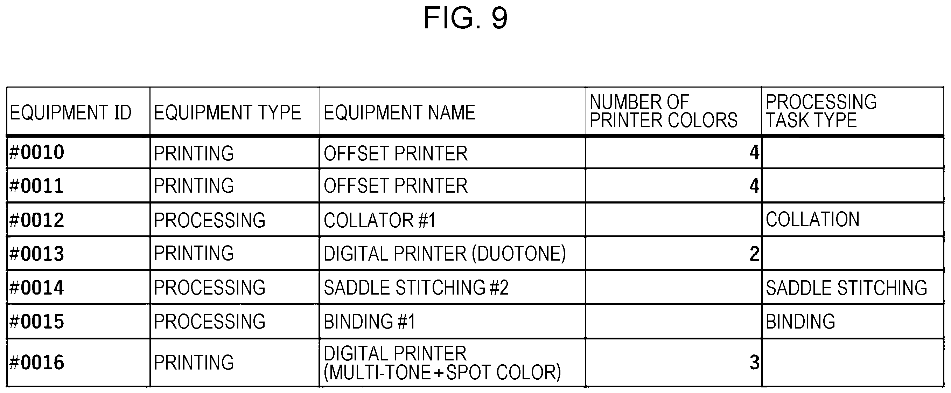

Fig. 9 is an example of the equipment management table 50. The equipment management table 50 contains entries in which equipment information such as an equipment ID, an equipment name, kinds of equipment tasks (number of printer colors and processing task type), and the like is managed. Note that a table is illustrated in which equipment IDs are acquired and managed without differentiating between printers 2 and processing machines 4, but since the content to be managed differs for each equipment type, the information may also be managed in tables split up by equipment type.

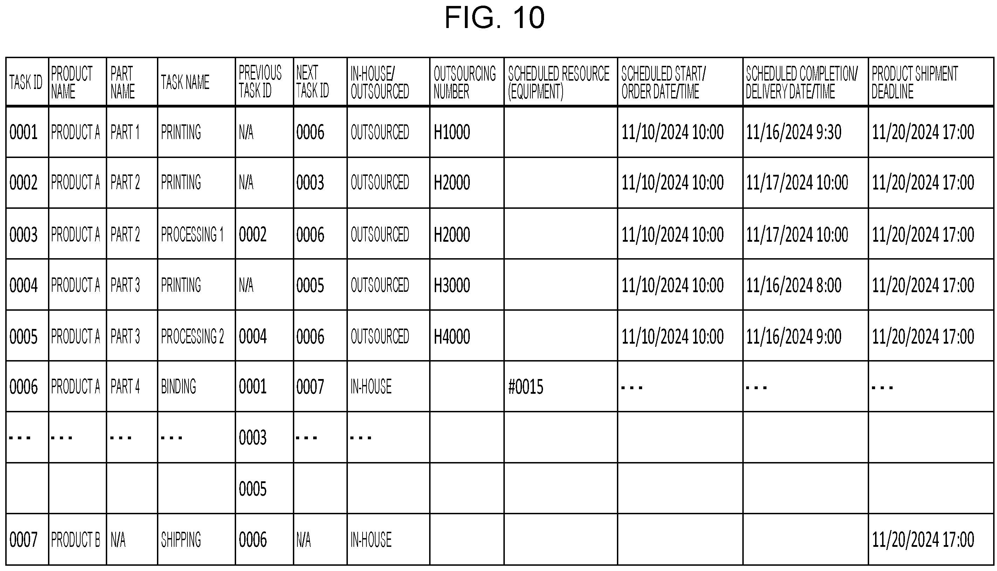

Fig. 10 is an example of the task management table 51. The task management table 51 contains entries in which task management information such as a task ID, a product name, a part name, a task name, a previous task ID, a next task ID, an in-house/outsourced classification, an outsourcing number, a schedule resource (equipment), a scheduled start/order date/time, a scheduled completion/delivery date/time, a product shipment deadline, and the like is managed. In the task management information stored in the task management table 51, the product/part to which a task belongs as well as the previous and next tasks are managed. For example, on the workflow diagram screen 38, the task management information is referenced to draw connection information between objects to which tasks belong. In addition, an in-house/outsourced classification and, in the case of outsourcing, an outsourcing number (order number) are managed as part of the task information. Date/time information for display on the schedule screen 34 is managed as a scheduled start date/time and a scheduled completion date/time in the case of an in-house task. In the case of an outsourced task, the date/time information is managed as a scheduled order date/time and a scheduled delivery date/time. Note that tasks making up a product are managed according to a product shipment deadline, which serves as a deadline for an order.

### (Outsourced job time setting)

The change management unit 93 may determine a time setting for an outsourced job by using a trained model that has been trained using a history of jobs and/or resources. The change management unit 93 may also refer to a history of jobs processed in the past and determine a time setting on the basis of the actual time it took to process jobs similar to the job in question. The change management unit 93 may also determine a time setting for an outsourced job by acquiring the time setting from an order-receiving/order-placing system, and update the time setting according to updates in the order management system 6.

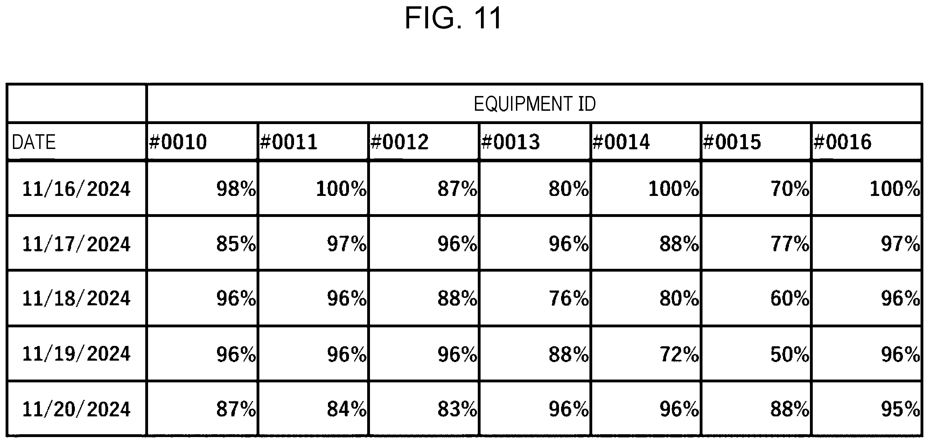

Fig. 11 is an example of the equipment utilization rate management table 52. The equipment utilization rate management table 52 contains entries in which the daily utilization rates of equipment are managed by equipment ID. The change management unit 93 calculates and manages the utilization rates of equipment on the basis of the equipment information and the scheduled operating time within the daily uptime for each piece of equipment from the task management information. Note that the timescale is not limited to daily and may be any manageable division; for example, if a shift rotation is used, equipment utilization rates are calculated on the basis of the scheduled operating time within the uptime during each shift.

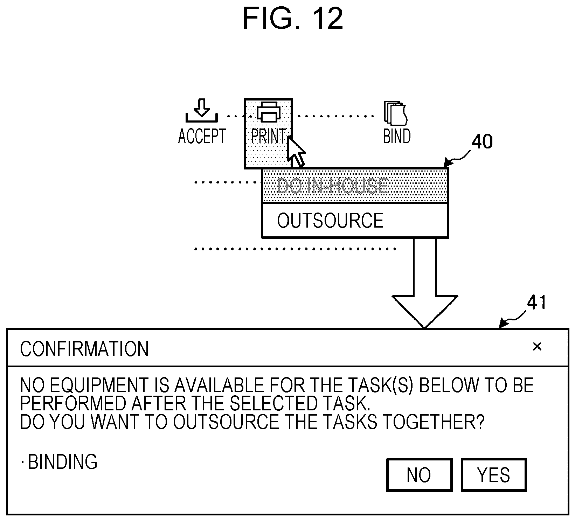

The change management unit 93 may suggest change processing by referring to the workflow information for a job (task) immediately before or immediately after a targeted in-house job. Fig. 12 is an example of a change processing suggestion screen. In Fig. 12, when outsourcing is selected for a printing task, a suggestion screen 41 is displayed to confirm whether to also outsource the binding task immediately after if no equipment is available. In this way, the change management unit 93 refers to the utilization rates of resources in the workflow information, and if the utilization rate of a resource that has been assigned the job immediately before or immediately after is at or above a threshold, permits changing of the job to an outsourced job. The above describes an example of permitting the changing of an individual task to an outsourced job, but the configuration is not limited thereto. For example, a suggestion may also be presented to confirm whether to batch-outsource all the tasks included in a part or in a product as a single unit.

### <Flow of processes>

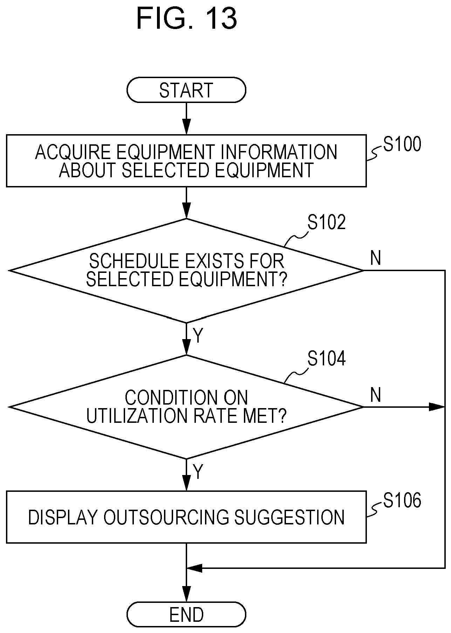

Next, a flow of processes by the production management system 10 will be described. Figs. 13 to 17 are flowcharts illustrating an example of the flow of information processes executed by the production management system 10. Processes may also be executed in parallel. The processes are performed by having the processor 11 read out the information processing program 12A from the storage 12, load the program in the memory 13, and execute the program.

Fig. 13 is a control flow illustrating a discrimination process in a case of outsourcing a selected task. The discrimination process identifies a task that may not be outsourced. Note that this discrimination process is performed when the user selects a task and performs a drag and drop operation. In the following discrimination process, the selected task and the task immediately before or immediately after the selected task are each processed as the currently handled task.

In step S100, the processor 11 acquires equipment information about the equipment selected as the target to which the currently handled task is assigned.

In step S102, the processor 11 determines whether or not a schedule (the assignment of another task) exists for the equipment selected with respect to the currently handled task. If a schedule exists, the flow proceeds to step S104, whereas if a schedule does not exist, the process is ended.

In step S104, the processor 11 determines whether or not a condition on utilization rate is met. The condition on utilization rate is met if, upon referring to the scheduled time of the task and the utilization rate of the selected equipment, adding the schedule time would cause the utilization rate to exceed a threshold. Any value up to a maximum of 100% may be used as the threshold. If the condition on utilization rate is met, the flow proceeds to step S106, whereas if the condition on utilization rate is not met, the process is ended.

In step S106, the processor 11 presents a display suggesting outsourcing because the currently handled task may not be done in-house.

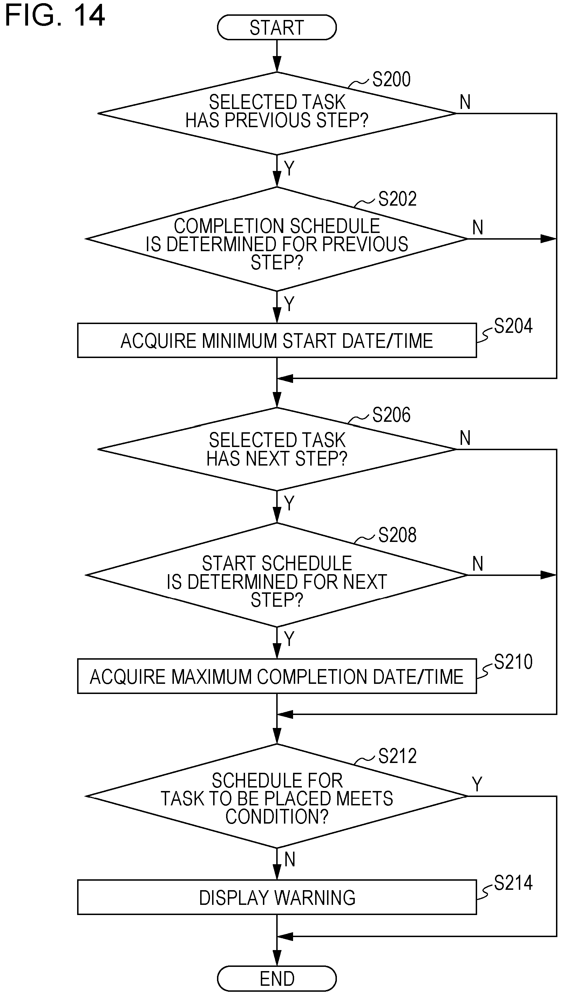

Fig. 14 is a control flow for performing a placement discrimination process with consideration for an order relationship. For example, when the user attempts to place the schedule of an in-house job by drag and drop, the placement may not be allowed due to the schedules of the steps for the already-assigned tasks before and after. Accordingly, the "task in the previous step" to the target task to be placed on the schedule is identified, and it is determined whether the target task may be placed between the date/time when the previous step is to be completed and the date/time when the next step is to be started. If the target task may not be placed, a warning to that effect is displayed.

In step S200, the processor 11 determines whether the selected task has a previous step. If a previous step exists, the flow proceeds to step S202, whereas if a previous step does not exist, the flow proceeds to step S206.

In step S202, the processor 11 determines whether the completion schedule (scheduled completion/delivery date/time) is determined for the previous step. If the completion schedule is determined, the flow proceeds to step S204, whereas if not, the flow proceeds to step S206.

In step S204, the processor 11 calculates and acquires a minimum start date/time on the basis of the completion schedule. The minimum start date/time is the earliest date/time when the task is allowed to start in consideration of the scheduled completion/delivery date/time of the previous step.

In step S206, the processor 11 determines whether the selected task has a next step. If a next step exists, the flow proceeds to step S208, whereas if a next step does not exist, the flow proceeds to step S212.

In step S208, the processor 11 determines whether the start schedule (scheduled start/order date/time) is determined for the next step. If the start schedule is determined, the flow proceeds to step S210, whereas if not, the flow proceeds to step S212.

In step S210, the processor 11 calculates and acquires a maximum completion date/time on the basis of the start schedule. The maximum completion date/time is the maximum date/time when the task is allowed to be completed in consideration of the scheduled start/order date/time of the next step.

In step S212, the processor 11 determines whether the schedule for the task to be placed meets a condition. The schedule meets the condition if minimum start date/time < scheduled task start date/time (the scheduled task start date/time is later than the minimum start date/time) and scheduled task completion date/time < maximum completion date/time (the scheduled task completion date/time is earlier than the maximum completion date/time). If there is no next step, only the condition on the previous step may be met. If the schedule meets the condition, the process is ended, whereas if the schedule does not meet the condition, the flow proceeds to step S214.

In step S214, the processor 11 displays a warning to indicate that the condition is not met.

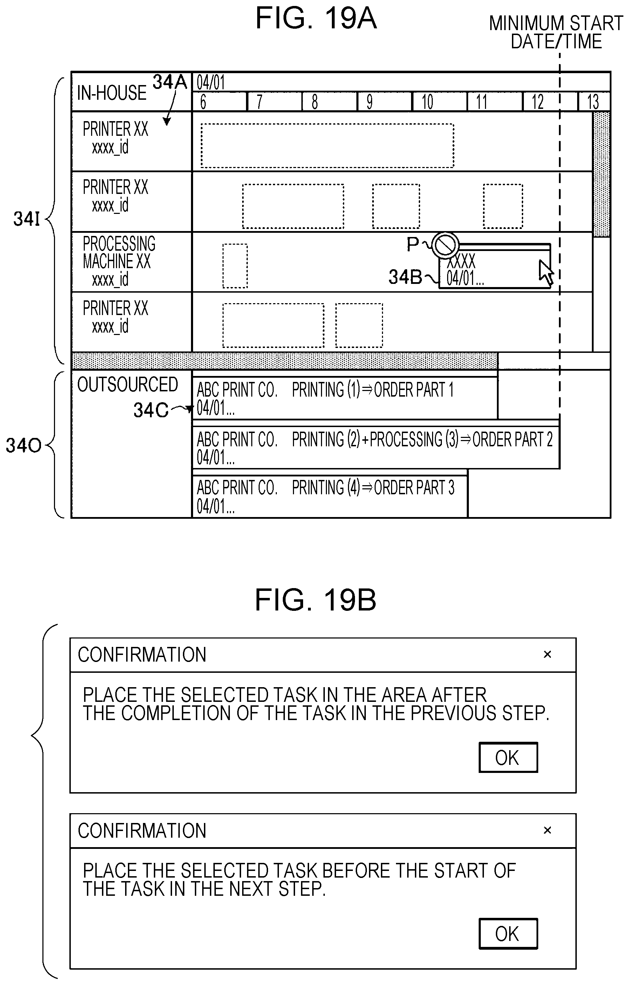

Figs. 19A and 19B are an example of warnings issued when a condition is not met. Fig. 19A is an example in which the user tries to place, by drag and drop, a task at a date/time earlier than the minimum start date/time with respect to an outsourced job in the previous step, and a warning is displayed in the form of a prohibited mark (P) indicating that the placement is not allowed. Fig. 19B is an example in which warnings are displayed through error messages.

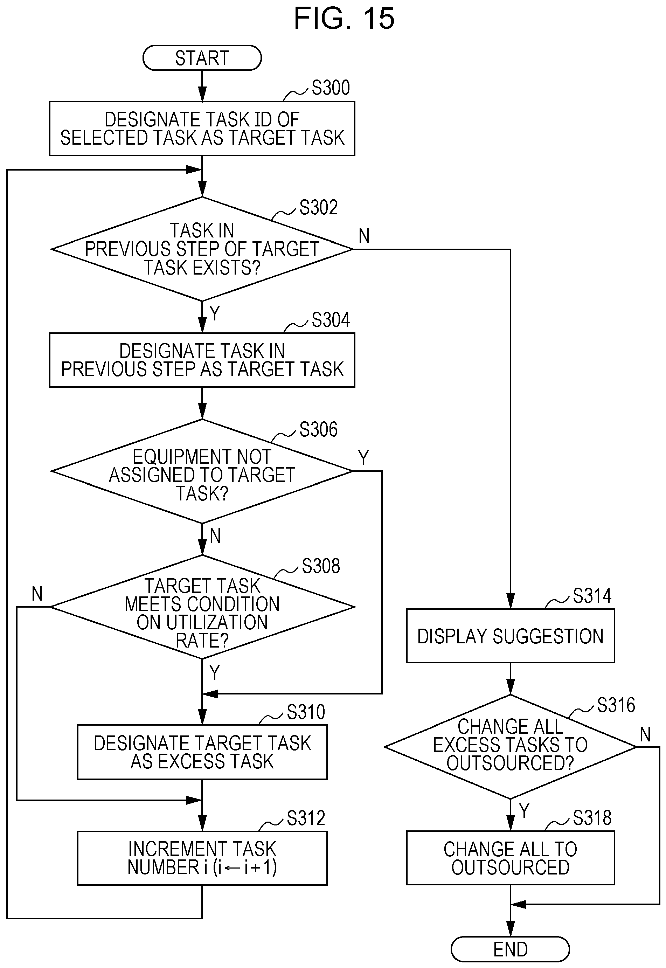

Fig. 15 is a control flow for collectively changing consecutive tasks before and/or after a selected task to outsourced tasks.

In step S300, the processor 11 designates the task ID of a user-selected task as the target task. The task ID is designated by, for example, setting (TW-ID: target task ← SW-ID: selected task) and (LO-ID[i]: excess task, task number: i ← 0), thus designating the task on which processing is to be performed.

In step S302, the processor 11 determines whether a task in the previous step of the target task exists. If a task in the previous step exists, the flow proceeds to step S304, whereas if a task in the previous step does not exist, the flow proceeds to step S314.

In step S304, the processor 11 designates the task in the previous step as the target task. For example, processing is performed to set (TW-ID: target task ← PreW-ID: task in previous step).

In step S306, the processor 11 determines whether equipment is not assigned to the target task. If equipment is not assigned, the flow proceeds to step S310, otherwise the flow proceeds to step S308.

In step S308, the processor 11 determines whether the target task and the assigned equipment meet a condition on utilization rate. The condition on utilization rate is similar to step S104. If the condition on utilization rate is met, the flow proceeds to step S310, whereas if the condition on utilization rate is not met, the flow proceeds to step S312.

In step S310, the processor 11 designates the target task as an excess task. The designation at this point is achieved by performing processing to set (LO-ID[i]: excess task ← TW-ID: target task).

In step S312, the processor 11 increments the task number i of excess tasks (i ← i+1), then returns to step S302 and repeats the process.

In step S314, the processor 11 presents a suggestion display suggesting to batch-change the tasks designated as excess tasks to outsourced tasks. Note that if there are no excess tasks, a display is presented to indicate that there are no outsourceable tasks, instead of the suggestion display.

In step S316, the processor 11 determines the user has chosen to batch-change the excess tasks to outsourced tasks in response to the suggestion display. If the user has chosen to batch-change the excess tasks to outsourced tasks, the flow proceeds to step S318, whereas if not, the process is ended.

In step S318, the processor 11 performs change processing to batch-change the excess tasks to outsourced tasks.

Note that although the above describes an example of consecutively checking tasks in previous steps, when performing processing on the next steps rather than the previous steps, excess tasks in the next steps may be batch-changed to outsourced tasks in a similar way.

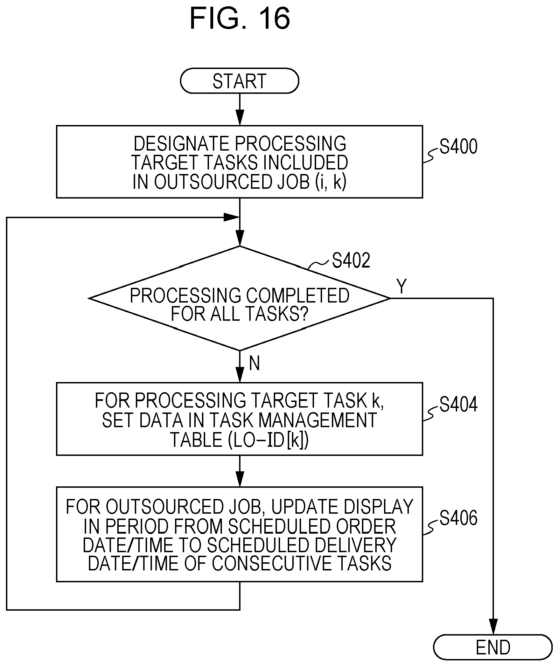

Fig. 16 is a control flow for updating a table and updating a schedule display when change processing is performed to change a job from an in-house job to an outsourced job.

In step S400, the processor 11 designates the processing target task included in an outsourced job that has been changed. Let i be the total number of tasks included in the outsourced job, and k be the processing target task.

In step S402, the processor 11 determines whether processing has been completed for all processing target tasks in the outsourced job. The processing determination at this point may be achieved by, for example, the loop processing (for (k=0; k<i; k++)). If processing has been completed for all tasks, the process is ended, whereas if processing has not been completed for all tasks, the flow proceeds to step S404.

In step S404, the processor 11 sets, for the processing target task k, data in the task ID LO-ID[k] in the task management table. This setting of data may be achieved by, for example, setting data in the entry associated with the task ID as follows. At this point, the time settings of the scheduled start/order date/time and the scheduled completion/delivery date/time to be set may be determined using the outsourced job time setting method described above.
- taskID.in-house/outsourced ← outsourced
- taskID.scheduled_resource(equipment) ← 0
- taskID.outsourcing_number
- taskID.scheduled_start/order_date/time
- taskID.scheduled_completion/delivery_date/time

In step S406, the processor 11 updates the display in the period from the scheduled order date/time to the scheduled delivery date/time of consecutive tasks for the corresponding outsourced job in the outsourced job area 34O on the schedule screen 34, on the basis of the task management table in which data has been set.

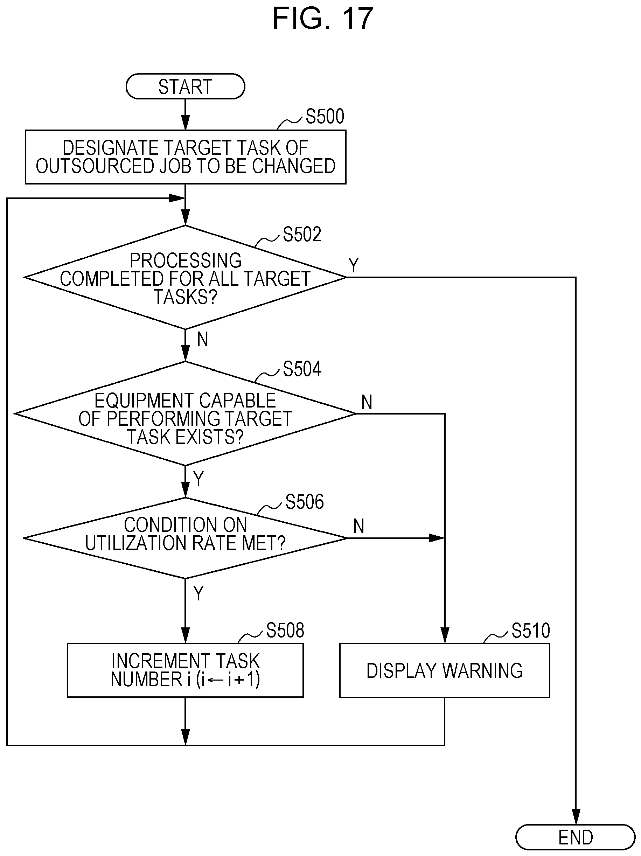

Fig. 17 is a control flow for determining whether to discontinue when attempting to change a job from an outsourced job to an in-house job.

In step S500, the processor 11 designates the processing target task in an outsourced job to be changed. At this point, processing is performed to set (TW-ID[i]: target task ← SW-ID: first task in selected outsourced job, task number: i ← 0). Tasks included in the same order that has been placed as an outsourced job may be designated as target tasks.

In step S502, the processor 11 determines whether processing has been completed for all target tasks in the outsourced job to be changed. If processing has been completed for all target tasks, the process is ended, whereas if processing has not been completed for all target tasks, the flow proceeds to step S504.

In step S504, the processor 11 refers to the equipment management table 50 and determines whether equipment capable of performing the target task exists. If suitable equipment exists, the flow proceeds to step S506, whereas if not, the flow proceeds to step S510.

In step S506, the processor 11 determines whether the schedule of the target task and the utilization rate on the relevant date/time of the specified equipment meet a condition on utilization rate. If the condition on utilization rate is met, the flow proceeds to step S508, whereas if the condition on utilization rate is not met, the flow proceeds to step S510.

In step S508, the processor 11 increments the task number i (i ← i+1), then returns to step S502 and repeats the process.

In step S510, the processor 11 displays a warning to indicate that a task that may not be done in-house exists, then returns to step S502 and repeats the process. Along with the display of the warning, the changing of the target task to an in-house task is discontinued. Examples of tasks that may not be done in-house include (1) the case in which equipment corresponding to the type of task is not present inside the in-house production facility, and (2) the case in which equipment with sufficient performance to perform the task by the deadline is unavailable or the resources (equipment, workers) for performing the task by the deadline are unavailable.

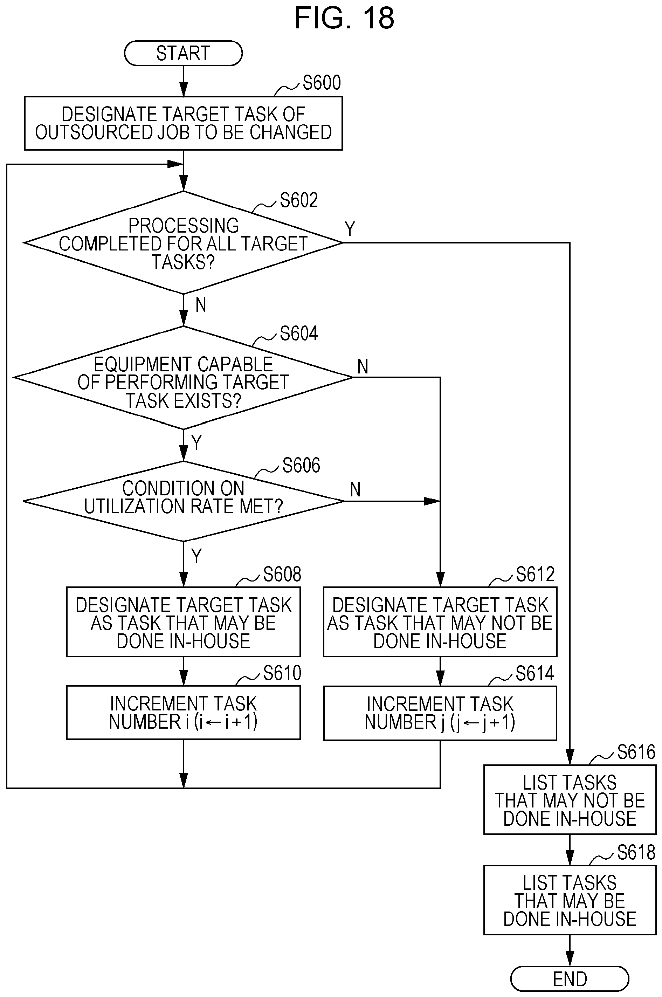

Fig. 18 is a control flow for extracting a task that may not be done in-house when attempting to change a job from an outsourced job to an in-house job.

In step S600, the processor 11 designates the processing target task in an outsourced job to be changed. At this point, processing is performed to set (TW-ID[i]: target task ← SW-ID: first task in selected outsourced job, task number: i ← 0, task number j ← 0). Tasks included in the same order that has been placed as an outsourced job may be designated as target tasks. Note that i is incremented when a task that may be done in-house is designated, and j is incremented when a task that may not be done in-house is designated. Accordingly, the target tasks may be processed by updating the designations up to task number i+j.

In step S602, the processor 11 determines whether processing has been completed for all target tasks in the outsourced job to be changed. If processing has been completed for all target tasks, the flow proceeds to step S616, whereas if processing has not been completed for all target tasks, the flow proceeds to step S604.

In step S604, the processor 11 refers to the equipment management table 50 and determines whether equipment capable of performing the target task exists. If suitable equipment exists, the flow proceeds to step S606, whereas if not, the flow proceeds to step S612.

In step S606, the processor 11 determines whether the schedule of the target task and the utilization rate on the relevant date/time of the specified equipment meet a condition on utilization rate. If the condition on utilization rate is met, the flow proceeds to step S608, whereas if the condition on utilization rate is not met, the flow proceeds to step S612.

In step S608, the processor 11 designates the target task as a task that may be done in-house. At this point, processing is performed to set (IN-ID[i]: task that may be done in-house ← TW-ID: target task), for example.

In step S610, the processor 11 increments the task number i (i ← i+1), then returns to step S602 and repeats the process.

In step S612, the processor 11 designates the target task as a task that may not be done in-house. At this point, processing is performed to set (UN-ID[i]: task that may not be done in-house ← TW-ID: target task), for example.

In step S614, the processor 11 increments the task number j (j ← j+1), then returns to step S602 and repeats the process.

In step S616, the processor 11 displays a list of the tasks that may not be done in-house (UN-ID[j]).

In step S618, the processor 11 displays a list of the tasks that may be done in-house (IN-ID[i]).

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### Appendix

(((1))) An information processing system comprising:
   a memory; and
   a processor configured to:
      in a job management interface having areas where jobs are assignable to individual resources,
      accept selection of a specific area while a first schedule screen on which job assignment is limited is being displayed;
      display a second schedule screen on which the selected specific area is displayed at a larger scale than on the first schedule screen; and
      upon accepting placement of a card of an unassigned job on the second schedule screen, update the card of the accepted job to a corresponding position on the first schedule screen.
(((2))) The information processing system according to (((1))), wherein the processor is configured to perform selection of the specific area according to selection of a range given by a user operation or selection in specific processing with respect to selection of an unassigned job.
(((3))) The information processing system according to (((2))), wherein the processor is configured to refer to utilization rates of the resources in the workflow information, and if the utilization rate of a resource that has been assigned the job immediately before or immediately after is at or above a threshold, permit changing of the job to the outsourced job.
(((4))) The information processing system according to any one of (((1))) to (((3))), wherein when processing is accepted from a user to change one job out of a plurality of steps to be performed for a same part to the outsourced job, the processor is configured to change the other jobs to the outsourced job.
(((5))) The information processing system according to any one of (((1))) to (((4))), wherein when processing is accepted from a user to change a specific job that involves processing using a plurality of parts to the outsourced job, the processor is configured to batch-change the plurality of jobs for processing the plurality of parts to be used in the specific job to the outsourced job.
(((6))) The information processing system according to any one of (((2))) to (((5))), wherein the processor is configured to change a job to the outsourced job when the corresponding job immediately before or immediately after is unassigned.
(((7))) The information processing system according to any one of (((2))) to (((6))), wherein when processing is accepted from a user to change two consecutive jobs to the outsourced job in a workflow for managing jobs in units of parts, the processor is configured to collectively place the consecutive jobs as a single continuous job card representing the outsourced job on the schedule screen.
(((8))) The information processing system according to any one of (((2))) to (((7))), wherein when processing is accepted from a user to change a job to the outsourced job, the processor is configured to determine a time setting for the outsourced job by using a trained model that has been trained using a history of jobs and/or resources.
(((9))) The information processing system according to any one of (((2))) to (((8))), wherein when processing is accepted from a user to change a job to the outsourced job, the processor is configured to refer to a history of jobs processed in the past and determine a time setting for the outsourced job based on the actual time it took to process jobs similar to the job in question.
(((10))) The information processing system according to any one of (((2))) to (((9))), wherein when processing is accepted from a user to change a job to the outsourced job, the processor is configured to acquire a time setting for the outsourced job from an order-receiving/order-placing system and update the time setting according to updates in the order-receiving/order-placing system.
(((11))) The information processing system according to any one of (((1))) to (((10))), wherein when processing is accepted from a user to change the outsourced job to the in-house job, and the outsourced job includes jobs of different types, the processor is configured to display the jobs as unassigned jobs split into two job cards.
(((12))) The information processing system according to any one of (((1))) to (((11))), wherein when processing is accepted from a user to change the outsourced job to the in-house job, and the outsourced job includes jobs of different types, the processor is configured to split the jobs into two job cards, place only the job that corresponds to where the outsourced job was moved to, and display the other job as an unassigned job.
(((13))) The information processing system according to any one of (((1))) to (((12))), wherein when processing is accepted from a user to change the outsourced job to the in-house job, the processor is configured to refer to workflow information and prohibit changing of the outsourced job that includes a task for which the job in question may not be done in-house.
(((14))) The information processing system according to (((2))) or (((3))), wherein
   the utilization rates of the resources in the workflow information are calculated based on scheduled operating times, within an uptime during a prescribed interval, that correspond to the resources.
(((15))) An information processing program causing a computer to execute a process comprising:
   in a job management interface having areas where jobs are assignable to individual resources,
   accept selection of a specific area while a first schedule screen on which job assignment is limited is being displayed;
   display a second schedule screen on which the selected specific area is displayed at a larger scale than on the first schedule screen; and
   upon accepting placement of a card of an unassigned job on the second schedule screen, update the card of the accepted job to a corresponding position on the first schedule screen.

According to the first aspect, it is possible to improve the convenience of job management in the case of managing in-house jobs and outsourced jobs in a workflow.

According to the second aspect, it is possible to improve convenience with consideration for batch processing of corresponding jobs.

According to the third aspect, it is possible to change a job to an outsourced job in consideration of utilization rate.

According to the fourth aspect, it is possible to change a job to an outsourced job in consideration of a step for a part.

According to the fifth aspect, it is possible to change a job to an outsourced job in consideration of steps for multiple parts.

According to the sixth aspect, it is possible to improve convenience in a case where a job and a corresponding job immediately before or immediately after are outsourced collectively.

According to the seventh aspect, it is possible to ensure perspicuity in a case of outsourcing multiple jobs for a single part.

According to the eighth aspect, it is possible to determine a time setting for an outsourced job efficiently using a trained model.

According to the ninth aspect, it is possible to determine a time setting for an outsourced job efficiently by referring to similar jobs.

According to the 10th aspect, it is possible to determine a time setting with consideration for updates in an order-receiving/order-placing system.

According to the 11th aspect, it is possible to improve convenience when changing an outsourced job to an in-house job.

According to the 12th aspect, it is possible to improve convenience when changing an outsourced job to an in-house job.

According to the 13th aspect, it is possible to improve convenience when changing an outsourced job to an in-house job.

According to the 14th aspect, it is possible to manage the changing of a job to an outsourced job in consideration of a utilization rate based on calculation of scheduled operating time.

According to the 15th aspect, it is possible to improve the convenience of job management in the case of managing in-house jobs and outsourced jobs in a workflow.

## Claims

1. An information processing system comprising:
a memory; and
a processor configured to:
in a job management interface having areas where jobs are assignable to individual resources,
display, along the same time axis on a schedule screen for placing jobs, an area where in-house jobs are placed and an area where outsourced jobs are placed, in-house jobs being jobs assigned for in-house production and outsourced jobs being jobs assigned for outsourced production.

2. The information processing system according to claim 1, wherein when processing is accepted from a user to change the in-house job to the outsourced job, the processor is configured to refer to workflow information and batch-change the targeted in-house job and a corresponding job immediately before or immediately after to the outsourced job.

3. The information processing system according to claim 2, wherein the processor is configured to refer to utilization rates of the resources in the workflow information, and if the utilization rate of a resource that has been assigned the job immediately before or immediately after is at or above a threshold, permit changing of the job to the outsourced job.

4. The information processing system according to any one of claims 1 to 3, wherein when processing is accepted from a user to change one job out of a plurality of steps to be performed for a same part to the outsourced job, the processor is configured to change the other jobs to the outsourced job.

5. The information processing system according to any one of claims 1 to 4, wherein when processing is accepted from a user to change a specific job that involves processing using a plurality of parts to the outsourced job, the processor is configured to batch-change the plurality of jobs for processing the plurality of parts to be used in the specific job to the outsourced job.

6. The information processing system according to any one of claims 2 to 5, wherein the processor is configured to change a job to the outsourced job when the corresponding job immediately before or immediately after is unassigned.

7. The information processing system according to any one of claims 2 to 6, wherein when processing is accepted from a user to change two consecutive jobs to the outsourced job in a workflow for managing jobs in units of parts, the processor is configured to collectively place the consecutive jobs as a single continuous job card representing the outsourced job on the schedule screen.

8. The information processing system according to any one of claims 2 to 7, wherein when processing is accepted from a user to change a job to the outsourced job, the processor is configured to determine a time setting for the outsourced job by using a trained model that has been trained using a history of jobs and/or resources.

9. The information processing system according to any one of claims 2 to 8, wherein when processing is accepted from a user to change a job to the outsourced job, the processor is configured to refer to a history of jobs processed in the past and determine a time setting for the outsourced job based on the actual time it took to process jobs similar to the job in question.

10. The information processing system according to any one of claims 2 to 9, wherein when processing is accepted from a user to change a job to the outsourced job, the processor is configured to acquire a time setting for the outsourced job from an order-receiving/order-placing system and update the time setting according to updates in the order-receiving/order-placing system.

11. The information processing system according to any one of claims 1 to 10, wherein when processing is accepted from a user to change the outsourced job to the in-house job, and the outsourced job includes jobs of different types, the processor is configured to display the jobs as unassigned jobs split into two job cards.

12. The information processing system according to any one of claims 1 to 11, wherein when processing is accepted from a user to change the outsourced job to the in-house job, and the outsourced job includes jobs of different types, split the jobs into two job cards, the processor is configured to place only the job that corresponds to where the outsourced job was moved to, and display the other job as an unassigned job.

13. The information processing system according to any one of claims 1 to 12, wherein when processing is accepted from a user to change the outsourced job to the in-house job, the processor is configured to refer to workflow information and prohibit changing of the outsourced job that includes a task for which the job in question may not be done in-house.

14. The information processing system according to claim 2 or 3, wherein
the utilization rates of the resources in the workflow information are calculated based on scheduled operating times, within an uptime during a prescribed interval, that correspond to the resources.

15. An information processing program causing a computer to execute a process comprising:
in a job management interface having areas where jobs are assignable to individual resources,
accept selection of a specific area while a first schedule screen on which job assignment is limited is being displayed;
display a second schedule screen on which the selected specific area is displayed at a larger scale than on the first schedule screen; and
upon accepting placement of a card of an unassigned job on the second schedule screen, update the card of the accepted job to a corresponding position on the first schedule screen.
